# EUROPÄISCHE PATENTSCHRIFT

(11) **EP 1 294 649 B1**
(45) Veröffentlichungstag und Bekanntmachung des Hinweises auf die Patenterteilung: **22.05.2013**
(21) Anmeldenummer: 01945186.3
(22) Anmeldetag: 23.05.2001
(51) Int. Cl.: C03C 1/00, C03C 17/30, C03C 11/00, C03B 19/12, B01J 20/286, B01J 20/28, B01J 20/282, B01J 20/30

(54) **GELIERFORM ZUR HERSTELLUNG VON FORMKÖRPERN**
GEL MOULD FOR THE PRODUCTION OF SHAPED BODIES
MOULE DE GELIFICATION POUR FABRIQUER DES CORPS MOULES

(30) Priorität: 23.06.2000 DE 10030665
(43) Veröffentlichungstag der Anmeldung: 26.03.2003
(73) Patentinhaber: Merck Patent GmbH, 64293 Darmstadt (DE)
(72) Erfinder: LUBDA, Dieter, 64625 Bensheim (DE); CABRERA, Karin, 63303 Dreieich (DE)
(86) Internationale Anmeldenummer: PCT/EP2001/005914
(87) Internationale Veröffentlichungsnummer: WO 2002/000562

(56) Entgegenhaltungen:
- EP-A- 0 196 719
- WO-A-98/29350
- US-A- 3 922 392
- US-A- 5 624 875
- PATENT ABSTRACTS OF JAPAN vol. 013, no. 262 (C-608), 16. Juni 1989 (1989-06-16) & JP 01 065030 A (SEIKO EPSON CORP), 10. März 1989 (1989-03-10)
- HAYES J D ET AL: "Sol-gel chemistry-based Ucon-coated columns for capillary electrophoresis" JOURNAL OF CHROMATOGRAPHY B: BIOMEDICAL SCIENCES & APPLICATIONS, ELSEVIER SCIENCE PUBLISHERS, NL, Bd. 695, Nr. 1, 18. Juli 1997 (1997-07-18), Seiten 3-13, XP004125677 ISSN: 0378-4347
- P. LEMBKE ET AL.: "Liquid Chromatography", ULLMANN'S ENCYCLOPEDIA OF INDUSTRIAL CHEMISTRY, vol. B5, 1994, pages 260-261, XP007911866, ISBN: 3-527-20135-1
- H. MINAKUCHI, K. NAKANISHI, N. SOGA N, N. ISHIZUKA, N. TANAKA: "Effect of skeleton size on the performance of octadecylsilylated continuous porous silica columns in reversed-phase liquid chromatography", JOURNAL OF CHROMATOGRAPHY A, vol. 762, 1997, pages 135-146, XP004116700, DOI: 10.1016/S0021-9673(96)00944-2

## Beschreibung

Die Erfindung betrifft die Verwendung von Gelierformen aus hydrophobisierten Glasrohren für die Herstellung von monolithischen Formkörpern.

Zur chromatographischen Trennung von Substanzgemischen werden als Trennmaterialien zumeist partikuläre Sorbenzien eingesetzt. Seit einiger Zeit finden jedoch auch vermehrt poröse monolithische Formkörper Anwendung in der Chromatographie, da sie sehr gute Trennleistungen bei hohen Durchflußraten zeigen.

Monolithische Formkörper für die Chromatographie weisen idealerweise zwei Arten von Poren auf - Makroporen und Mesoporen.
Die Trennleistung der monolithischen Formkörper wird durch die Skelettdichte des Gerüstes in Verbindung mit einer bestimmten Größe der Makroporen hervorgerufen. Wichtig ist, daß Skelett und Makroporen über den Querschnitt der Säule eine möglichst homogene Struktur zeigen. Inhomogenitäten führen zu schlechter Trennleistung und schlechter Peaksymmetrie.

Monolithische Formkörper für die Chromatographie können aus einem organischen Polymernetzwerk oder aus anorganischen Basismaterialien bestehen. Die Herstellung organischer Polymerformkörper erfolgt häufig direkt in Formmaterialien, wie Säulenrohren. Im Gegensatz zu den anorganischen Formkörpern, die weitestgehend unflexibel sind, weisen Formkörper aus organischen Polymeren zumeist eine hohe Eigenflexibilität auf.

Die Hydrogele anorganischer Monolithen werden in Gelierformen gebildet und müssen, da Schrumpfungsprozesse einen wesentlichen Anteil bei der Ausbildung poröser anorganischer Materialien darstellen, aus der Gelierform entfernt und später separat weiterverarbeitet und ummantelt werden.

Für die spätere Formgebung und die Qualität der Formkörper ist jedoch die Wahl geeigneter Gelierformen ein entscheidender Schritt bei der Herstellung derartiger Materialien. Von besonderer Bedeutung sind dabei folgende Eigenschaften der Gelierformen:
1) Die Gelierform muß einen ausreichend guten Wärmeübergangskoeffizienten besitzen. Falls dies nicht der Fall ist, entsteht ein Temperaturgradient, der während der Temperierung Monolithen mit inhomogener Skelettstruktur erzeugt. Besonders häufig treten Unterschiede zwischen Randbereich und Innenbereich der Monolithen auf.
2) Die Gelierform muß eine ausreichend hohe thermische Stabilität aufweisen, damit die Form während einer thermischen Belastung stabil bleibt.
3) Um eine Inprozesskontrolle zu ermöglichen, sind die Gelierformen idealerweise transparent.
4) Die Gelierform muß derart beschaffen sein, daß Wechselwirkungen der Form mit den darin befindlichen Reaktanden während der Herstellung nicht zu Inhomogenitäten in den Randbereichen der Formkörper führen.

Bislang wurde kein Material zur Herstellung von Gelierformen gefunden, das alle oben genannten Anforderungen erfüllt und zur Herstellung qualitativ einheitlicher Formkörper geeignet ist.

Metallrohre weisen zwar eine gute thermische Stabilität auf und besitzen einen guten Wärmeübergang, sind aber nicht transparent. Zudem sind die Monolithen oft nur schwer aus den Rohren zu entfernen und zeigen starke Unregelmäßigkeiten im Gel.

In J. of Chrom. 762 (1997), Seite 135-146 wird die Verwendung eines Polycarbonat Molds als Gelierform beschrieben. Polycarbonat-Rohre sind transparent und steif genug für die Verwendung als Gelierform, zeigen aber für die Herstellung hochqualitativer Formkörper keine ausreichende thermische Stabilität.

In EP 0 196 719 werden Glaskörper aus einer thixotropen Suspension hergestellt, wobei Gelierformen aus hydrophobem, vorzugsweise elastischem Kunststoff verwendet werden.

Zufriedenstellende Ergebnisse werden mit PVDF- (Polyvinylidenfluorid) Rohren erzielt. Allerdings sind diese Rohre nur noch schwach transparent und verfärben sich bei höheren Temperaturen orange bis braun, was auf mangelnde thermische Stabilität schließen läßt.

Aufgrund ihrer guten thermischen Stabilität und Wärmeleitfähigkeit sowie ihrer Transparenz erschienen Glasrohre als Gelierform für die Herstellung von anorganischen Formkörpern optimal. Die in Glasrohren hergestellten Monolithen weisen jedoch eine große Inhomogenität in ihrer Skelett- und Porenstruktur auf und zeigen in chromatographischen Tests sehr schlechte Trenneigenschaften.

Aufgabe der vorliegenden Erfindung war es daher, eine Gelierform bereitzustellen, die gute Eigenschaften bezüglich Wärmeleitfähigkeit, Transparenz und thermischer Stabilität aufzeigt und mit der hochwertige Monolithen mit guten Trenneigenschaften hergestellt werden können.

Es wurde gefunden, daß der Einsatz von Glasrohren als Gelierform dann zu Formkörpern mit hervorragenden Trenneigenschaften führt, wenn die Oberfläche der Glasrohre vorher hydrophobisiert wurde. Die so hergestellten Formkörper zeigen in der Regel ein besseres chromatographisches Verhalten als Formkörper, die mit Gelierformen aus dem Stand der Technik hergestellt wurden.

Gegenstand der vorliegenden Erfindung ist die Verwendung von zumindest an der Innenwand hydrophobisierten Glasrohren als Gelierform zur Herstellung von anorganischen, porösen, monolithischen Formkörpern.

Bevorzugte Ausführungsform ist die Verwendung eines durch Silanisierung hydrophobisierten Glasrohres als Gelierform.

Gegenstand der vorliegenden Erfindung ist auch ein Verfahren zur Herstellung poröser anorganischer monolithischer Formkörper durch
a) Bereitstellen einer Gelierform;
b) Befüllen der Gelierform mit Monomersol;
c) Polymerisieren der Monomerlösung;
d) Altern des in Schritt c) entstandenen Gels zu Bildung von Poren,
wobei in Schritt a) ein zumindest an der Innenseite hydrophobisiertes Glasrohr als Gelierform bereitgestellt wird.

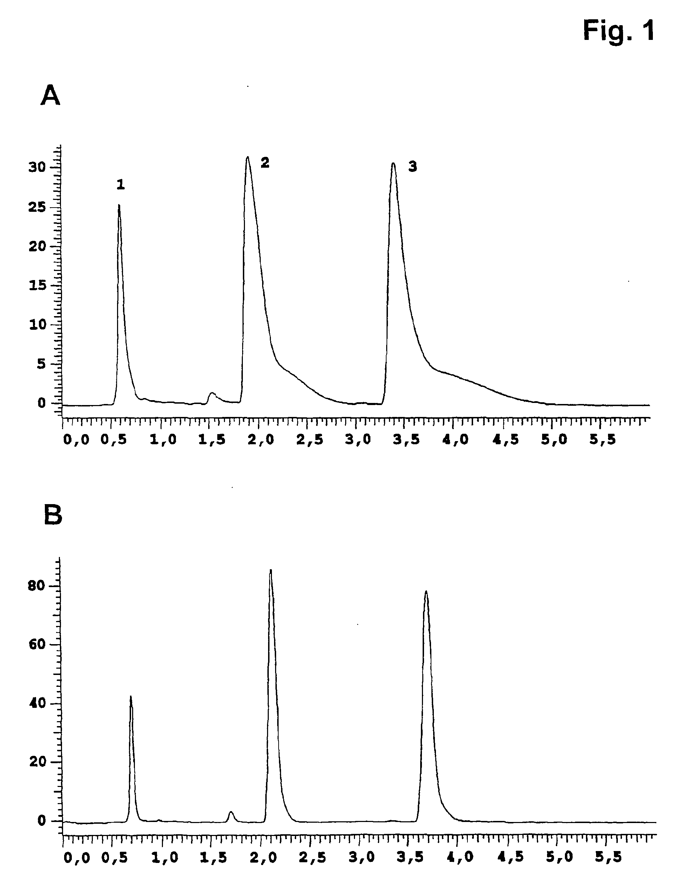

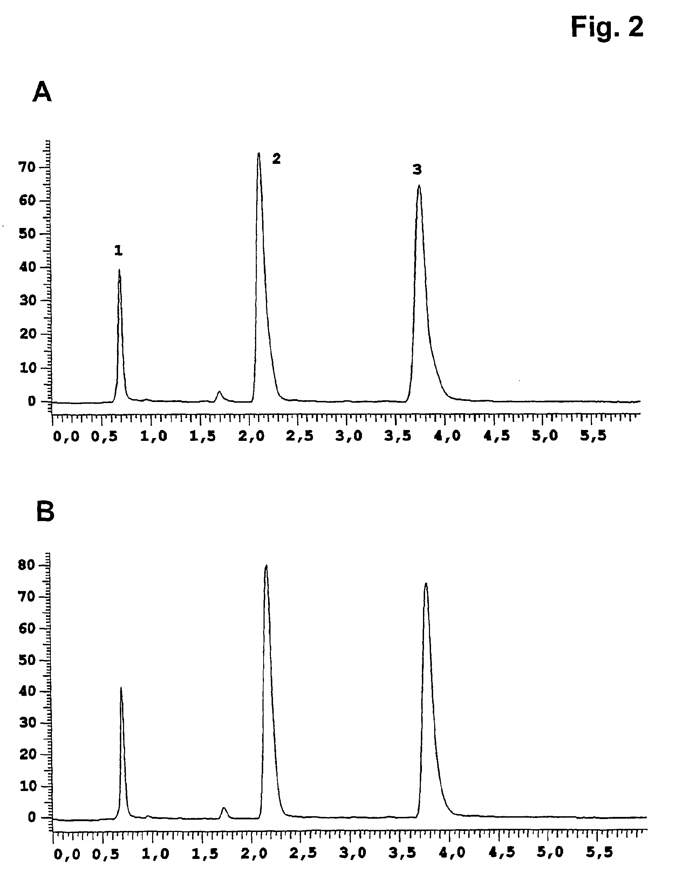

Abbildung 1 und 2 werden in Beispiel 1 näher erläutert.

Die Herstellung anorganischer poröser monolithischer Formkörper erfolgt typischerweise nach einem Sol-Gel Prozeß. Als Sol-Gel Prozesse werden weitverbreitete Verfahren bezeichnet, bei denen man zunächst polymerisierbare niedermolekulare Spezies erzeugt und schließlich über Polymerisationsreaktionen aggregierte oder polymerisierte Materialien erhält. Bevorzugte Varianten des Sol-Gel Prozesses werden in WO 95/03256 und besonders bevorzugt in WO 98/29350 offenbart.

Die Durchführung der Verfahren unter Verwendung der hydrophobisierten Gelierformen unterscheidet sich nicht von der Herstellung mit Gelierformen aus dem Stand der Technik.

Besonders bevorzugt wird ein hydrophobisiertes Glasrohr als Gelierform bei der Herstellung von porösen anorganischen monolithischen Formkörpern eingesetzt. Dabei werden typischerweise die folgenden Verfahrensschritte durchgeführt:
a) Bereitstellen eines zumindest an der Innenseite hydrophobisierten Glasrohres als Gelierform;
b) Befüllen der Gelierform mit Monomersol;
c) Polymerisieren der Monomerlösung;
d) Altern des in Schritt c) entstandenen Gels zu Bildung von Poren.

Als Gelierform wird erfindungsgemäß die Form bezeichnet, in die die monolithischen Formkörper während der Herstellung einpolymerisiert werden. Nach der Alterung wird der geschrumpfte Formkörper aus der Gelierform entfernt und für den Einsatz als chromatographisches Sorbens erneut ummantelt. Größe und Form der Gelierformen spiegelt im Allgemeinen die Größe und Form der Chromatographiesäulen wider. Typischerweise werden als Gelierform daher Rohre verwendet, deren Länge und Durchmesser in Bereichen liegen, die für analytische oder präparative Chromatographiesäulen üblich sind. Für bestimmte Anwendungen können jedoch auch andere Formen, wie beispielsweise eckige oder flache Formkörper, geeignet sein. Somit ist das erfindungsgemäß eingesetzte hydrophobisierte Glasrohr zwar bevorzugt aber nicht in jedem Fall rund ausgebildet.

Erfindungsgemäß wird als Gelierform ein Glasrohr verwendet, das beidseitig oder zumindest an der Innenseite hydrophobisiert ist. Der Hydrophobisierungsgrad von Glas kann durch die freie Oberflächenenergie beschrieben werden. Unbehandelte Glasrohre zeigen eine freie Oberflächenenergie von ca. 70-90 mN/m, die sich jeweils ungefähr zur Hälfte aus einem polaren und einem dispersen Anteil zusammensetzt. Durch eine Hydrophobisierung kann der polare Anteil der freien Oberflächenenergie reduziert werden. Je geringer der polare Anteil der freien Oberflächenergie der Gelierformen aus Glas ist, desto bessere Eigenschaften zeigen sie bei der Herstellung von Formkörpern. Erfindungsgemäß sollte daher der polare Anteil der freien Oberflächenenergie unter 10, bevorzugt unter 5, besonders bevorzugt unter 1 mN/m liegen.

Die Hydrophobisierung der Gelierformen aus Glas kann nach jedem Verfahren erfolgen, das eine Hydrophobisierung erzeugt, die unter den Synthesebedingungen der Formkörper ausreichend stabil ist und den polaren Anteil der freien Oberflächenenergie ausreichend reduziert. Beispielsweise lassen sich Derivatisierungsreaktionen aus dem Bereich der Kieselgel- oder Silika-Chemie, die zur Derivatisierung von Sorbenzien angewendet werden, auf die Hydrophobisierung von Glas übertragen. Beispiele für Hydrophobisierungsmethoden und entsprechende Reagenzien finden sich in K.K. Unger, "Porous Silica" Elsevier Scientific Publishing Company, 1979, Seite 83 - 130.

Bevorzugt erfolgt die Hydrophobisierung der Gelierformen durch Silanisierung mittels mono- di- oder trifunktionellen Alkoxy- oder Chlorsilanen. Bevorzugt sind dies Silane mit hydrophoben Resten, wie z.B. Alkylresten, besonders bevorzugt C8-C25 Resten. Beispielsweise zeigen Octadecyl-modifizierte Glasrohre einen polaren Anteil der freie Oberflächenenergie von ca. 0,1 mN/m.

Die Glasrohre werden dazu typischerweise mit einem Silan in einem Lösungsmittel versetzt. Nach der Reaktionszeit wird der Überschuss an Silan ausgewaschen.

Genauso kann die Hydrophobisierung der Glasoberfläche über einen mehrstufigen Prozeß erfolgen. Beispielsweise können die Glasrohre zunächst, wie für die Derivatisierung von Kieselgel bekannt, mit funktionellen Gruppen, z.B. Epoxiden, versehen werden und in einer nachfolgenden Reaktion z.B. mit ausreichend hydrophoben Polymerschichten belegt werden. Natürlich müssen auch die Polymerschichten die vorgenannten Anforderungen bezüglich chemischer und thermischer Stabilität erfüllen.

Eine weitere Möglichkeit ist die Synthese von Präpolymeren, wie Polysiloxanen oder Ormoceren, die im Anschluß auf der Glasoberfläche mechanisch oder kovalent gebunden werden.

Monolithische Formkörper für die Chromatographie, die in hydrophobisierten Glasrohren als Gelierform hergestellt wurden, zeigen hervorragende Trenneigenschaften. Die Trenneigenschaften von Formkörpern werden entscheidend von der Gleichmäßigkeit der Skelettstruktur beeinflußt. Während bei partikulären Sorbenzien Inhomogenitäten der Materialien über die gesamte Säulenlänge teilweise kompensiert werden, ist das bei monolithischen Sorbenzien nicht der Fall. Durch eine gute und gleichmäßige Ablösung von der Gelierform kann der Monolith gleichmäßig altern. Mittels hydrophobisierter Glasrohre als Gelierform können nun Formkörper hergestellt werden, die über den gesamten Bereich und Querschnitt homogen sind.

Dies zeigt sich auch in den Schrumpfungsraten. Während in Polycarbonat-Rohren hergestellt Formkörper nur um ca. 17% schrumpfen, weisen Formkörper, die in hydrophobisierten Glasrohren hergestellt wurden, Schrumpfungsraten von ca. 21% auf.

Auch ohne weitere Ausführungen wird davon ausgegangen, daß ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

Die vollständige Offenbarung aller vor- und nachstehend aufgeführten Anmeldungen, Patente und Veröffentlichungen, insbesondere der korrespondierenden Anmeldung DE 100 30 665, eingereicht am 23.06.2000, ist durch Bezugnahme in diese Anmeldung eingeführt.

### Beispiele

### 1. Trennung eines Substanzgemisches auf Trennsäulen, die mit unterschiedlichen Gelierformen hergestellt wurden

| | |
|---|---|
| Substanzgemisch: | Thioharnstoff (1), Progesteron (2), Anthracen (3) |
| Säulen: | Chromolith^{®} Performance RP-18e 100*4,6 mm, C18, endcapped |
| Eluent: | Acetonitril/Wasser 60/40 (v/v) |
| Flußrate: | 2 ml/min |
| Detektion: | UV 254 nm |
| Temperatur: | Raumtemperatur |
| Injektionsvolumen: | 10 µl |

Die monolithischen Sorbenzien wurden nach einem Sol-Gel-Verfahren entsprechend WO 98/29350 hergestellt und im Anschluß mit einem Octadecylsilan derivatisiert. Die Herstellung erfolgte in unbehandelten Glasrohren, Polycarbonat-Rohren, PVDF-Rohren bzw. hydrophobisierten Glasrohren als Gelierform. Die freie Oberflächenenergie des hydrophobisierten Glasrohres beträgt ca. 30 mN/m (mit einem polaren Anteil von unter 1 mN/m).
Die Chromatogramme der Trennungen sind in Abbildung 1 und 2 dargestellt (Abbildung 1A: Gelierform Glas unbehandelt; Abbildung 1B: Gelierform Glas hydrophobisiert; Abbildung 2A: Gelierform Polycarbonat; Abbildung 2B: Gelierform PVDF). Auf der Abszisse ist die Retentionszeit in Minuten, auf der Ordinate die Intensität in mV dargestellt. Thioharnstoff zeigt eine Retentionszeit um 0,6 bis 0,7 min, Progesteron um 2 min und Anthracen um 3,7 min.

Die Ergebnisse sind nochmals in folgender Tabelle zusammengefaßt. Die Güte einer monolithischen Säule für die HPLC kann über die Trennleistung N (Böden/m) einerseits und über die Peaksymmetrie (Tailingfaktor USP) andererseits beschrieben werden. Die Berechnung dieser Werte erfolgt nach bekannten Verfahren (z.B. K.K. Unger, Handbuch der HPLC, GIT Verlag, 1989). Die Tabelle zeigt einen Vergleich der Trennleistung und der Symmetrie für Peak Nr. 3:

| | Glasrohr unbehandelt | Polycarbonat | PVDF | Glasrohr hydrophob |
|---|---|---|---|---|
| Trennleistung [Böden/m] | 2000 | 6000 | 7700 | 7900 |
| Symmetrie | 5,46 | 1,61 | 1,54 | 1,49 |

Es zeigt sich, daß die hydrophobisierten Glasrohre den anderen Materialien überlegen sind. Da sie zusätzlich durch ihre einfache Verarbeitung, der thermischen Stabilität und der Transparenz wesentliche Vorteile gegenüber Kunststoff-Formen mit sich bringen, sind sie hervorragend als Gelierform zur Herstellung von Formkörpern geeignet.

## Patentansprüche

1. Verwendung eines zumindest an der Innenwand hydrophobisierten Glasrohrs als Gelierform zur Herstellung von anorganischen, porösen, monolithischen Formkörpern.

2. Verwendung eines zumindest an der Innenwand hydrophobisierten Glasrohrs nach Anspruch 1, **dadurch gekennzeichnet, dass** ein zumindest an der Innenwand silanisiertes Glasrohr eingesetzt wird.

3. Verfahren zur Herstellung poröser anorganischer monolithischer Formkörper durch
a) Bereitstellen einer Gelierform;
b) Befüllen der Gelierform mit Monomersol;
c) Polymerisieren der Monomerlösung;
d) Altern des in Schritt c) entstandenen Gels zu Bildung von Poren, **dadurch gekennzeichnet, dass** in Schritt a) ein zumindest an der Innenseite hydrophobisiertes Glasrohr als Gelierform bereitgestellt wird.

4. Verfahren nach Anspruch 3, wobei nach Schritt d) der Formkörper aus der Gelierform entfernt und für den Einsatz als chromatographisches Sorbens erneut ummantelt wird.

## Claims

1. Use of a glass tube which has been hydrophobicized at least on the inside wall as gelation mould for the production of inorganic, porous, monolithic mouldings.

2. Use of a glass tube which has been hydrophobicized at least on the inside wall according to Claim 1, **characterised in that** a glass tube which has been silanised at least on the inside wall is employed.

3. Process for the production of porous inorganic monolithic mouldings by
a) provision of a gelation mould;
b) filling of the gelation mould with monomer sol;
c) polymerisation of the monomer solution;
d) ageing of the gel formed in step c) for the formation of pores, **characterised in that** a glass tube which has been hydrophobicized at least on the inside is provided as gelation mould in step a).

4. Process according to Claim 3, where the moulding is removed from the gelation mould after step d) and re-clad for use as chromatographic sorbent.

## Revendications

1. Utilisation d'un tube en verre qui a été rendu hydrophobe au moins sur la paroi interne en tant que moule de gélation pour la production de moulages inorganiques, poreux, monolithiques.

2. Utilisation d'un tube en verre qui a été rendu hydrophobe au moins sur la paroi interne selon la revendication 1, **caractérisé en ce qu'**un tube en verre qui a été silanisé au moins sur la paroi interne est utilisé.

3. Procédé pour la production de moulages poreux inorganiques monolithiques au moyen de :
a) la fourniture d'un moule de gélation ;
b) le remplissage du moule de gélation avec un sol monomère ;
c) la polymérisation de la solution de monomère ;
d) le vieillissement du gel formé au niveau de l'étape c) pour la formation de pores,
**caractérisé en ce qu'**un tube en verre qui a été rendu hydrophobe au moins sur l'intérieur est fourni en tant que moule de gélation au niveau de l'étape a).

4. Procédé selon la revendication 3, dans lequel le moulage est enlevé du moule de gélation après l'étape d) et est re-revêtu pour une utilisation en tant que sorbant chromatographique.
